Europäisches Patentamt

European Patent Office

Office européen des brevets

(19)

(11) Publication number: 0 202 334
A1

# EUROPEAN PATENT APPLICATION

published in accordance with Art. 158(3) EPC

(21) Application number: 84904164.5

(22) Date of filing: 09.11.84

Data of the international application taken as a basis:

(86) International application number:
PCT/JP84/00540

(87) International publication number:
WO86/02854 (22.05.86 86/11)

(51) Int. Cl.⁴: **A 63 F 9/22**

(43) Date of publication of application:
26.11.86 Bulletin 86/48

(84) Designated Contracting States:
FR GB

(71) Applicant: BONANZA ENTERPRICES LTD.
3-43, Shinyamashita 3-chome Naka-ku
Yokohama-shi, Kanagawa 231(JP)

(72) Inventor: CHIBA, Kazumi
369-33 Honmokumotomachi Naka-ku Yokohama-shi
Kanagawa 231(JP)

(74) Representative: Tomlinson, Kerry John
Frank B. Dehn & Co. European Patent Attorneys Imperial
House 15-19 Kingsway
London WC2B 6UZ(GB)

(54) LIQUID CRYSTAL DISPLAY GAME APPARATUS WITH SAVINGS BOX.

(57) A liquid crystal display game apparatus is composed of an input means (2) for playing a game, a control means (3) for calculating the game logic, and a liquid crystal display device (4) driven by the means (2, 3). The game apparatus is integrally provided with a savings box (7). Further, a coin slot (9) is formed in the game apparatus. A coin passage (10) connecting to the coin slot (9) is divided into two passages at an intermediate portion thereof, that is, a deposit passage (11) connecting to the inside of the savings box (7) and a refund passage (12) connecting to a refund port (13). The coin passage (10) is provided therein with a coin detecting means (14) which detects a coin which has been dropped into the coin slot (9). When the coin detecting means (14) detects passage of a coin, the game is started. At the diverging point of the coin passage (10) into the deposit passage (11) and the refund passage (12) is provided a means which is instructed by the control means (3) to operate selectively as follows. When the result of game matches a predetermined score or scoring hand, a coin (17) which has been dropped into the coin slot (9) and whose destination has not yet been decided is delivered to the refund port (13), when the result of game does not match a predetermined score or scoring hand, the coin (17) is delivered to the savings box (7). Thus, it is possible to provide a game apparatus which allows a player to save money while enjoying a game. Further, the coin which is paid off when the result of game matches a predetermined score or scoring hand is the same as the coin which was dropped into the coin slot (9) in order to start the game. It is, therefore, possible to exclude any gambling aspect from the game apparatus, and it is rather possible to encourage infants and school children to save money.

EP 0 202 334 A1

./...

FIG.3

— 1 —

Specification

## Title of the Invention

Liquid Crystal Display Gaming

Apparatus Equipped with a Savings Box

## Background of the Invention

### Field of the Invention

This invention relates to a gaming apparatus or equipment using a liquid crystal display.

A liquid crystal display-equipped gaming apparatus according to this invention is operatively connected with a savings box in such a way that: when a coin is put in the coin slot of the gaming apparatus it is temporarily deposited, and it is returned to a player if he gains a good score or a winning combination of cards at the end of the game, and otherwise the coin is shifted to the savings box for deposit.

### Description of the Related Art

A gaming apparatus or equipment comprising an input means for providing necessary pieces of information for performing a given game, a control means for computing

- 2 -

the gaming logic according to a program and a liquid crystal display showing the proceeding of the game is well known, as for instance in Japanese Patent Application Laid-Open Nos. 56-23988; 57-66783; 57-1777784 and other official gazettes. Nobody can play the game for money because these are not gambling equipments. Therefore there is no problem of committing any crimes prescribed in the law when people play a game with such gaming equipments, but the game is less exciting than one which is played for money or involves a gamble. In fact, it is almost impossible to devise a new game which would cause as much excitement as would arise in a gamble. Even if a game which could be played with much fun should be devised, people would soon tire of the game. So great an excitement as people had when playing the game for the first time, will not arise again. As a matter of fact coin-operated gaming equipments which are designed to be able to play a game for money, or gambling equipments have gained general popularity. The gambling equipment, however, is most liable to cause social criminal problems, and is most harmful to minors.

0202334

– 3 –

## Summary of the Invention

This invention is based on the idea that if a game should be able to cause a psychological effect similar to that which would be caused in gambling the game would gain an ever lasting popularity, causing no harm to people. In the game which can be played in a coin-operated gaming apparatus according to this invention the game starts when a coin is put in the coin slot of the gaming apparatus, and if the player's score is below a predetermined number of points or if the player fails to gain a winning combination of cards, the coin is put in a savings box integrally attached to the gaming equipment, thus permitting the player to play the game with as much fun as he could gain in a gamble, not losing his money but depositing the same in the savings box. If the player's score is above a predetermined number of points, or if the player gains a winning combination of cards, the coin returns to him. It should be noted that the same coin as was put in the coin slot of the gaming apparatus is returned to the player at the end of the game if he wins the game, and that no multiplied amount of money can be obtained by the player, thus eliminating any hint of gambling from the game and saving money by putting it in the savings box in return.

for the fun which one gains in the game. A savings box-equipped gaming apparatus according to this invention comprises: input means for inputting necessary pieces of information for playing a game; control means for computing the game logic according to a program; a liquid crystal display operatively connected to the input and control means for showing the proceeding of the game; a savings box; a coin detector provided in a coin passage extending from a coin slot to the savings box and to a coin return, said coin detector being responsive to a coin when put in the coin slot for starting the program of the game; and selector means for allowing the coin to take the way to the coin return when the player's score is above a predetermined number of points or when he gains a winning combination of cards and for allowing the coin to take the other way to the savings box when the player's score is below the predetermined number of points or when he fails to gain the winning combination of cards. With this arrangement a player can game with much fun, saving his money in spite of gaining as much excitement as he would gain in a gamble, still eliminating any possibility of inducing the player to the habit of gambling. Thus, the gaming apparatus will cause no harm to minors.

Brief Description of the Drawings


Fig. 1 is a block diagram showing the general construction of a savings box-equipped gaming apparatus according to one embodiment of this invention;

Fig. 2 is a perspective view of the savings box-equipped gaming apparatus;

Fig. 3 is a longitudinal section showing an electro-magnetic driving type coin receiving-and-returning means;

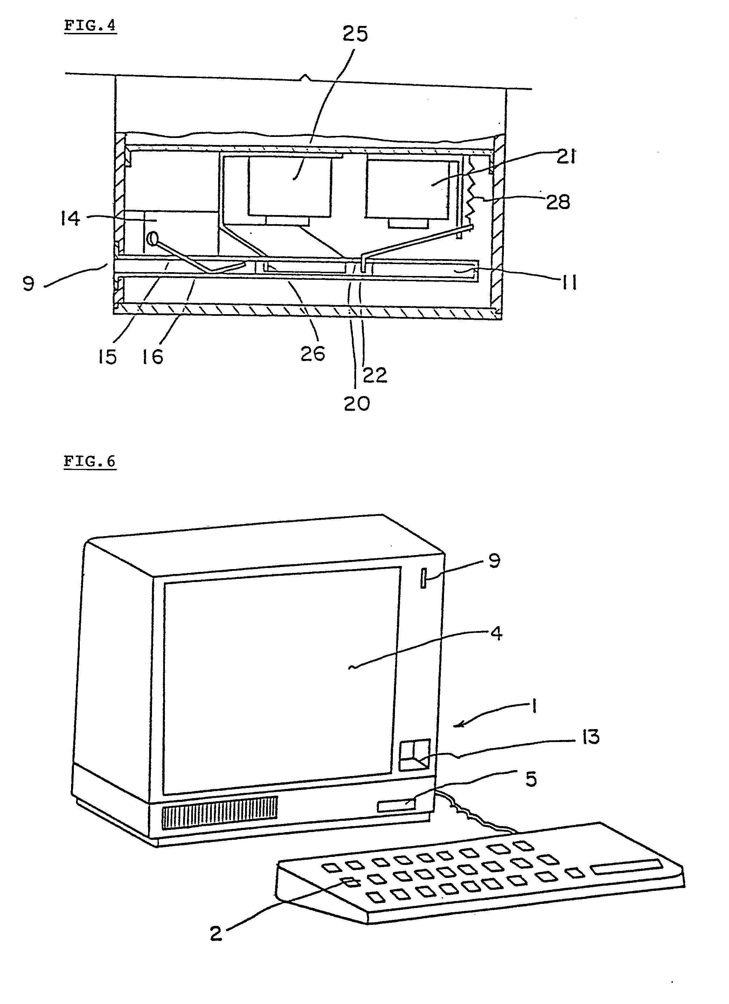

Fig. 4 is a cross section showing the electro-magnetic type depositing-or-returning selector;

Fig. 5 is a flowchart showing subsequent steps in the operation of the gaming apparatus; and

Fig. 6 is a perspective view of a savings box-equipped gaming apparatus according to another embodiment of this invention.


Preferred Embodiment of the Invention


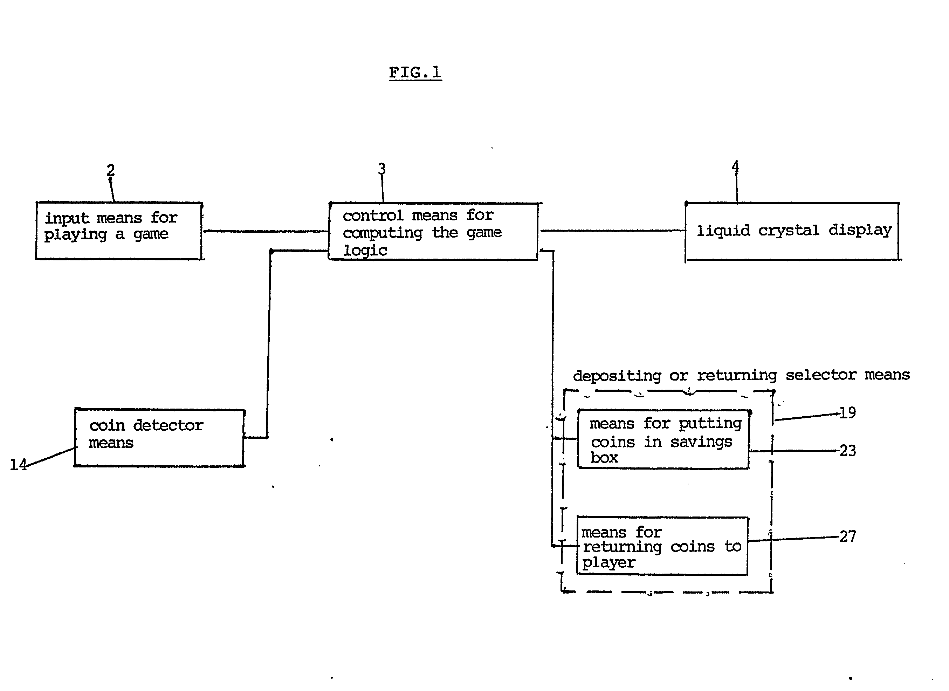

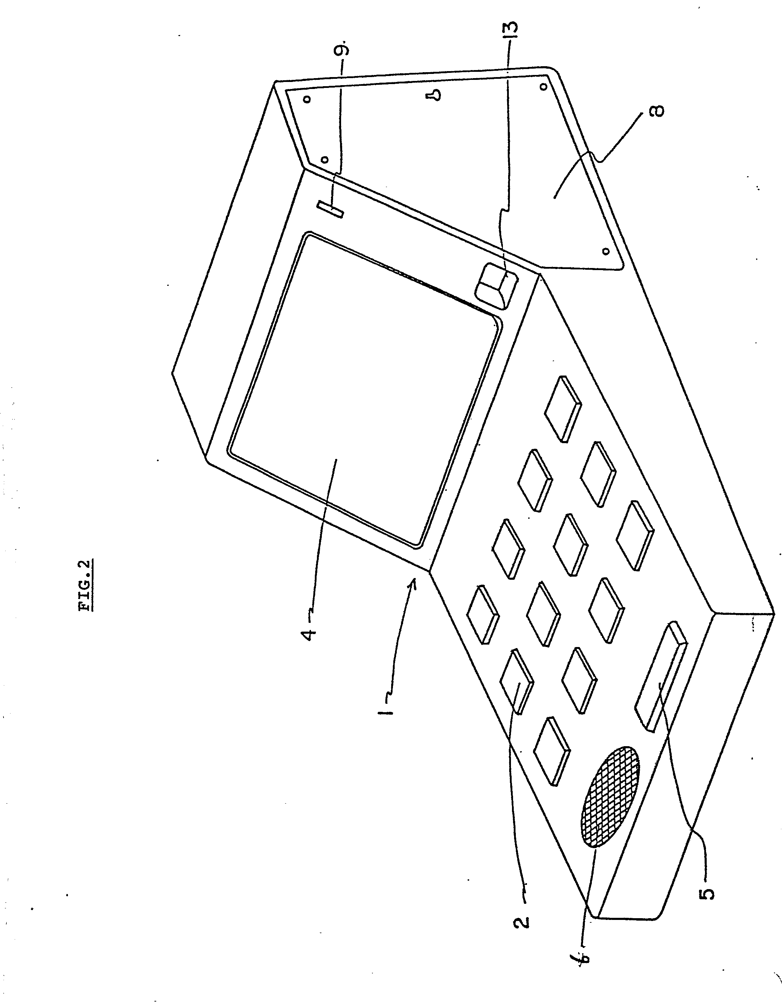

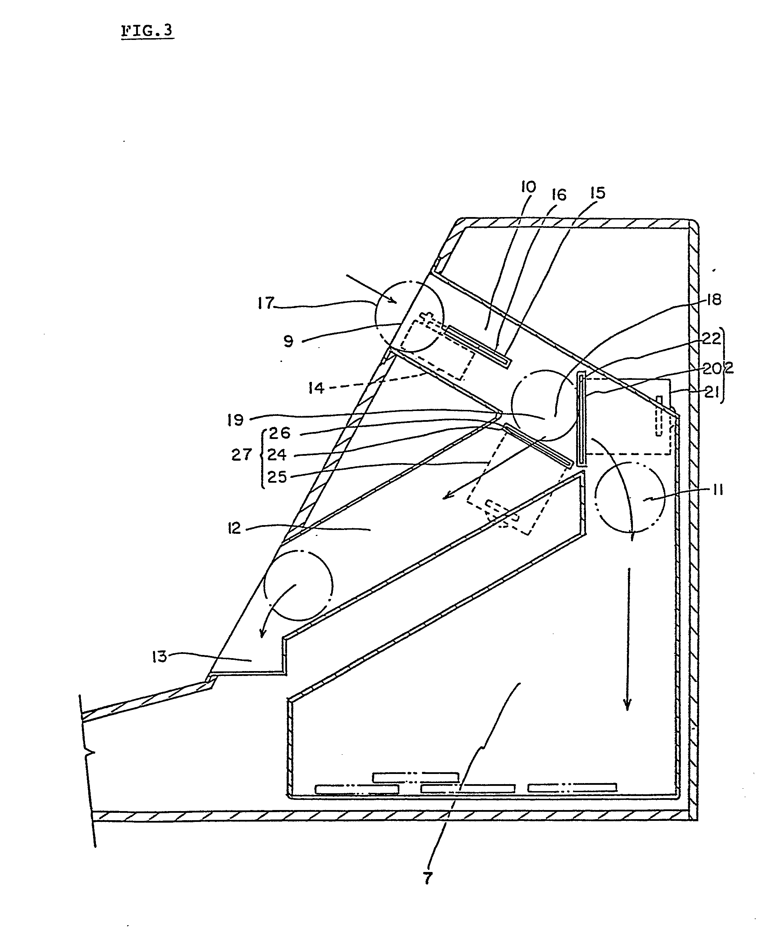

Fig. 1 shows the general construction of a savings box-equipped gaming apparatus using a liquid crystal display according to one embodiment of this invention. As is the case with a conventional gaming apparatus, it comprises input means 2 in the form of a combination of switching devices, keys and the like for playing the game, control means 3 in the form of integrated circuits for carrying out logic operations necessary for playing the game, and a liquid crystal display 4 driven under the control of the control means. On the console there are a switch 5 for putting an electric power supply such as an electric battery in circuit with the inner circuit of the gaming apparatus, a speaker 6 and other accessories for increasing the fun with which a player plays the game. The arrangement described so far is well known in the art and a variety of gaming equipments have been proposed and are commercially available, as for instance follows: gaming apparatus for simulating different kinds of sports; ones for simulating chess, bingo, cards, roulette, "go" and other games; ones for simulating different kinds of puzzles, number-matching games and other educational games; and ones for simulating shooting and wars. Gaming apparatuses commercially available range from a hand size to as large a size as a TV set. Input means and liquid crystal displays incorporated in such gaming apparatuses are designed elaborately in the hope of making the gaming apparatuses attractive in appearance. A liquid crystal display-equipped gaming apparatus according to this invention is characterized in that it has a savings box 7 integrated therewith. In Figs. 2 and 3 the savings box 7 is shown as being put behind the liquid crystal display 4. Otherwise, the savings box may be put in the vicinity of the input means 2. A lid 8 may be provided to the savings box 7, thereby permitting the player to take the coins out of the savings box after finishing the game. Otherwise, the savings box 7 may be closed, not readily allowing the withdrawal of money from the savings box once the money has been put therein.

As shown, a coin passage 10 extends from a coin slot 9, and it divides into two branch passages, which are designed to selectively open to the coin, one branch 11 extending to the savings box 7, and the other branch 12 extending to the coin return 13. These coin passages are designed to be large enough to allow the biggest coin to pass therethrough, thus naturally permitting coins of different sizes to pass therethrough. As shown, a coin detector in the form of switch 14 is provided in the inlet passage 10. A switch rod 16 projects from an opening 15 in one side wall of the coin passage to extend thereacross in the coin path. With this arrangement if a coin is put in the coin slot, the coin rolls down to push the switch rod 16 to make the switch 14 turn on, thereby starting the game.

A coin depositing-or-returning selector 19 is provided at the branching part of the coin passage.

It is responsive to the signal from the control means 3 for allowing the coin 17 to take the way 12 to the coin return 13 when the player's score is above a predetermined number of points, or when the player gains a winning combination of cards, and for allowing the coin 17 to take the other way 11 to the savings box 7 when the player's score is below the predetermined number of points or when the player fails to gain a winning combination of cards. The closing plate 22 of an electro-magnetic gate 21 projects from a slot 20 of the passage wall to normally close and momentarily open the inlet of the coin passage 11 to the savings box 7, thereby constituting a depositing means 23 for the savings box 7. On the other hand, the closing plate 26 of an electro-magnetic gate 25 projects from a slot 24 of the passage wall to normally close and momentarily open the inlet of the coin passage 12 to the coin return 13, thereby constituting a coin returning means 27. These closing plates 22 and 26 are normally urged by springs28 to close the inlets of the branch passages, thereby holding the coin until the game ends. When the game is finished, one of the closing plates is withdrawn from the way, thereby allowing the coin to take one way or the other. Which way the coin may take depends on the outcome of the game. More specifically, the central processing unit (CPU) or memory apparatus (ROM) constituting a part of the control means 3 directs a signal to the electro-magnetic gate 25 when a player gains a score above a predetermined number of points or a winning combination of cards, and then the gate 25 opens momentarily, thereby allowing the coin to take the way 12 to the coin return 13.

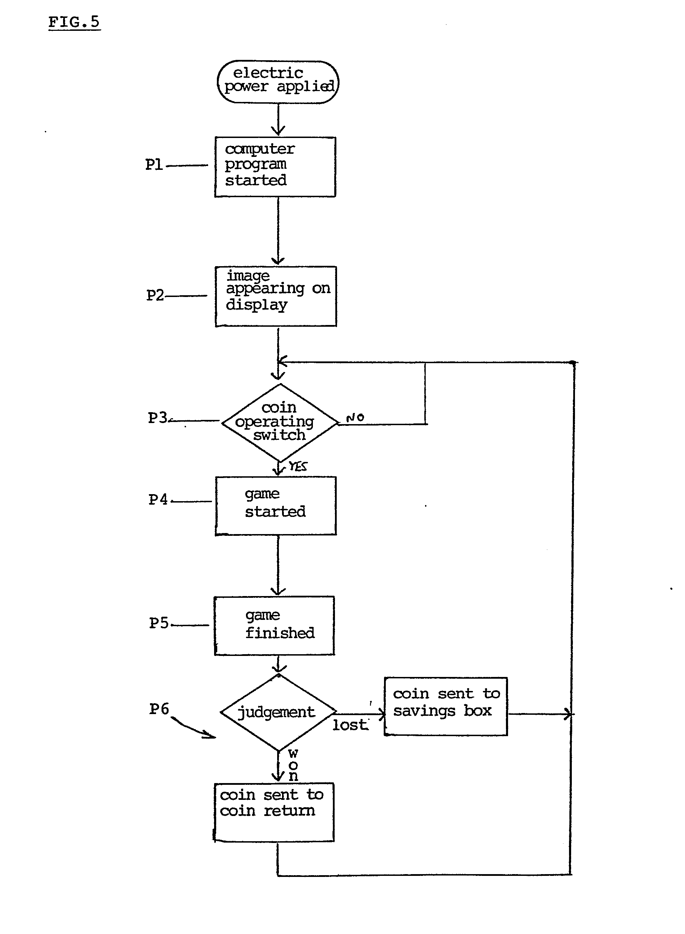

Otherwise, the CPU or ROM directs a signal to the electro-magnetic gate 21 to open the gate momentarily, thereby allowing the coin to take the way 11 to the savings box 7. The coin depositing-or-returning selector means 19 may take another form as, for instance, follows. A rotatable tray is provided to receive a coin when it is put in the coin slot 9 of the gaming apparatus, and the rotatable tray is responsive to a signal from the control means 3 for bringing itself to either the way to the savings box 7 or to the coin return 13 depending on the outcome of the game, and then turning the tray upside-down to cause the coin to fall on the selected way. Fig. 6 shows a different arrangement of gaming equipment which looks like a personal computer. Fig.5 shows a flowchart representing the operation of a gaming apparatus according to this invention. First, the power switch 5 is turned on. If occasions demand, the power supply is put in circuit with the integrated circuits and other electrical devices of the gaming apparatus all the time. Then, the computer program starts (Step P1), and images appear on the screen of the liquid crystal display (Step P2). Assume that a player puts a coin in the coin slot 9 of the gaming equipment. The coin 17 rolls down on the passage 10 to push the switch operating rod 16 of the coin detector 14 (Step P3). Then, a coin-detecting signal is directed to the control means 3 (Step P4). Then, the coin stops at the coin depositing-or-returnning selector means 19. Specifically, both of the electro-magnetic gates 21 and 25 are not energized, keeping their plates 22 and 26 in the ways 11 and 12 to the savings box 7 and to the coin return 13, thus not allowing the coin to take either way while the player is playing the game by operating the input means 2 on the console of the gaming equipment. When the game is over or in a predetermined length of time (Step P5), the result of the game appears on the screen of the liquid crystal display. In case of a sport game, the liquid crystal display shows what score is gained by the team selected by the player. In case of playing cards the liquid crystal display shows whether the player gains a winning combination of cards or not. As already described, the control means 3 directs a signal to the electro-magnetic gate 25 for momentarily energizing the same, thereby opening the way 12 to the coin return 13 when the player gains a score over a predetermined number of points or a winning combination of cards (Step P6). The coin thus returned /to the player is the exact one which he put in the coin slot of the gaming equipment. Thus, if he puts a "ten-yen" coin in the coin slot, the "ten-yen" coin returns to him. No multiplied amount of money can be paid to him, and therefore no gamble can be played. The player can play the game repeatedly so far as he continues winning games one after another. If he cannot gain a score over a predetermined number of points or a winning combination of cards, the other electro-magnetic gate 21 is energized to open the way 11 to the savings box 7, and then the coin is put in the savings box 7. As is apparent from the above, people can save their money while playing the game with fun. A gaming apparatus according to this invention may be designed to use a coin of any kind and size, and only the coin which is put in the coin slot of the gaming equipment returns to the player without being multiplied in amount of value, thus causing no harm even to minors in mind.

What is claimed is :

1. A savings box-equipped liquid crystal display type gaming apparatus comprising input means (2) for playing the game, control means (3) for computing the game logic and a liquid crystal display (4) operatively connected with said input means and control means characterized in that it further comprises a savings box (7), a coin detector (14) responsive to a coin (17) on a coin passage for starting the game program, the coin passage extending from the coin shot (9) of the gaming apparatus and being adapted to selectively communicate with either a passage to the coin return (13) of the gaming apparatus or to the savings box, and a coin depositing-or-returning selector means (19) for allowing the coin to take the passage to the coin return (13) if a player gains a score over a predetermined number of points or a winning combination of cards and for allowing the coin to take the way to the savings box (7) if he fails to gain a score over the predetermined number of points or the winning combination of cards.

2. A savings box-equipped liquid crystal display type gaming apparatus according to claim 1 wherein said coin passage extending from the coin slot of the gaming apparatus is divided in two branch passages, one (11) extending to said savings box (7) and the other (12) extending to the coin return (13) of the gaming apparatus, said coin depositing-or-returning selector means (19) being provided at the branching point of said coin passage and being composed of two electro-magnetic gates (21 and 25) one being in the vicinity of the inlet of the passage to the savings box (7) and having a closing plate (22) normally closing the passage (11) to the savings box and momentarily opening the same when energized, the other being in the vicinity of the inlet of the passage (12) to the coin return (13) of the gaming apparatus and having a closing plate (26) normally closing the passage (12) to the coin return (13), and momentarily opening the same when energized, said control means (3) being adapted to dispatch necessary signals of instructions for momentarily energizing the electro-magetic gate (25) when a player gains a score over a predetermined number of points or a winning combination of cards, and for momentarily energizing the electro-magnetic gate (21) when he fails to gain a score over the predetermined number of points or the winning combination of cards.

## FIG.1

input means for
playing a game — 2

control means for
computing the game
logic — 3

liquid crystal display — 4

coin detector
means — 14

depositing or returning selector means

means for putting
coins in savings
box — 19, 23

means for
returning coins to
player — 27

1/5

0202334

FIG.2

FIG.3

FIG.4

FIG.6

FIG.5

```
              ┌─────────────────┐
             (  electric        )
             (  power applied   )
              └─────────────────┘
                       │
                       ▼
              ┌─────────────────┐
   P1 ──────  │ computer        │
              │ program         │
              │ started         │
              └─────────────────┘
                       │
                       ▼
              ┌─────────────────┐
   P2 ──────  │ image           │
              │ appearing on    │
              │ display         │
              └─────────────────┘
                       │
                       ▼
                      ╱ ╲
                     ╱   ╲
   P3 ────────      ╱ coin ╲      NO
                   ╱operating╲─────────►
                   ╲ switch  ╱
                    ╲       ╱
                     ╲     ╱
                      ╲ ╱ YES
                       │
                       ▼
              ┌─────────────────┐
   P4 ──────  │ game            │
              │ started         │
              └─────────────────┘
                       │
                       ▼
              ┌─────────────────┐
   P5 ──────  │ game            │
              │ finished        │
              └─────────────────┘
                       │
                       ▼
                      ╱ ╲
                     ╱   ╲             ┌────────────────┐
   P6 ────►        ╱judgement╲  lost   │ coin sent to   │
                   ╲        ╱──────────│ savings box    │
                    ╲      ╱           └────────────────┘
                     ╲    ╱
                      ╲  ╱
                      w│
                      o│
                      n▼
              ┌─────────────────┐
              │ coin sent to    │
              │ coin return     │
              └─────────────────┘
```

## INTERNATIONAL SEARCH REPORT

International Application No. PCT/JP84/00540

| I. CLASSIFICATION OF SUBJECT MATTER (if several classification symbols apply, indicate all) |
|---|
| According to International Patent Classification (IPC) or to both National Classification and IPC |
| Int. Cl$^3$ A63F9/22 |

**II. FIELDS SEARCHED**

| Minimum Documentation Searched | |
|---|---|
| Classification System | Classification Symbols |
| IPC | A63F9/00, 9/22, A45C1/12, G07F9/00 |

| Documentation Searched other than Minimum Documentation to the Extent that such Documents are Included in the Fields Searched | |
|---|---|
| Jitsuyo Shinan Koho | 1926 – 1984 |
| Kokai Jitsuyo Shinan Koho | 1971 – 1984 |

**III. DOCUMENTS CONSIDERED TO BE RELEVANT**

| Category* | Citation of Document, with indication, where appropriate, of the relevant passages | Relevant to Claim No |
|---|---|---|
| Y | JP, B2, 51-30813 (Ooki Haruo), 3 September 1976 (03. 09. 76), Column 2, lines 10 to 17 | 1, 2 |
| Y | JP, U, 57-144177 (Nippon Koinko Kabushiki Kaisha), 10 September 1982 (10. 09. 82) | 1, 2 |
| A | JP, Y1, 47-33729 (Yugen Kaisha Asahi Design-sha), 12 October 1972 (12. 10. 72), Column 1, lines 16 to 19 | 1, 2 |
| A | JP, Y1, 49-28959 (Mitsumi Sangyo Kabushiki Kaisha), 6 August 1974 (06. 08. 74), Column 1, lines 18 to 24 | 1, 2 |

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search | Date of Mailing of this International Search Report |
|---|---|
| November 29, 1984 (29. 11. 84) | December 10, 1984 (10. 12. 84) |
| International Searching Authority | Signature of Authorized Officer |
| Japanese Patent Office | |